# EUROPEAN PATENT SPECIFICATION

(11) **EP 1 502 474 B1**
(45) Date of publication and mention of the grant of the patent: **25.07.2007**
(21) Application number: 03719005.5
(22) Date of filing: 06.05.2003
(51) Int. Cl.: H04Q 11/00, H04J 14/02

(54) **HIERARCHICAL SWITCH ARCHITECTURE FOR CORE OPTICAL NETWORKS**
HIERARCHISCHE VERMITTLUNGSARCHITEKTUR FÜR OPTISCHE KERNNETZE
ARCHITECTURE DE COMMUTATION HIERARCHIQUE POUR RESEAUX OPTIQUES CENTRAUX

(30) Priority: 08.05.2002 US 141037
(43) Date of publication of application: 02.02.2005
(73) Proprietor: Altera Corporation, San Jose, CA 95134 (US)
(72) Inventor: HARNEY, Gordon, Ottawa, Ontario K2K 3H6 (CA); GRUBER, John, Orleans, Ontario K1C 2G1 (CA); JAKOBIK, Bogdan, Hull, Québec (CA)
(74) Representative: Geismar, Thierry
(86) International application number: PCT/IB2003/001759
(87) International publication number: WO 2003/096740

(56) References cited:
- WO-A-01/18576
- WO-A-01/58204
- CA-A- 2 285 128
- YASUKAWA S ET AL: "HIGH-SPEED MULTI-STAGE ATM SWITCH BASED ON HIERARCHICAL CELL RESEQUENCING ARCHITECTURE AND WDM INTERCONNECTION" IEICE TRANSACTIONS ON ELECTRONICS, INSTITUTE OF ELECTRONICS INFORMATION AND COMM. ENG. TOKYO, JP, vol. E82-C, no. 2, February 1999 (1999-02), pages 219-227, XP000893477 ISSN: 0916-8524

## Description

### FIELD OF THE INVENTION

The present invention relates generally to a layered architectural arrangement for optical transport networks and, more particularly, to an architectural arrangement for a network switching node within a dense wavelength division multiplexing (DWDM) optical transport network.

### BACKGROUND OF THE INVENTION

Early DWDM optical transport networks were designed to handle predominantly voice and private line network traffic. Such network traffic tends to be regionally concentrated. Thus, early optical transport networks typically employed point-to-point DWDM and sub-channel switching that terminated all wavelengths of the network traffic into an electrical layer at each network switching node.

More recently, Internet-based data has emerged as the predominant form of network traffic being supported by optical transport networks. Unlike voice and private line traffic, Internet-based network traffic is more widely distributed over larger geographic area. As a result, long haul optical networks were developed to increase optical reach for such network traffic.

Conventional switches are disclosed in CA-A-2285128, WO01/18576, WO01/58204 and EP-A-0949837. More particularly CA-A-2285128 discloses an arrangement and a method according to the preambles of claims 1 and 9.

However, conventional switches are not hierarchically functional enough nor scalable enough to serve multiple applications at multiple optical layers. As a result, these networks still employ point-to-point DWDM and sub-channel switching at each network switching node.

Therefore, it is desirable to provide a layered architectural arrangement for a network switching node in a DWDM optical transport network.

### SUMMARY OF THE INVENTION

In a DWDM optical transport network, numerous optical data signals are multiplexed together to form a single optical system signal. The optical system signal may be constituted in an optical line hierarchy that defines a plurality of optical layers within the optical transport space. In accordance with the present invention, an architectural arrangement is provided for a network switching node within a DWDM optical transport network. The architectural arrangement for the network switching node employs at least one switching device operating within one or more of the optical layers. The integrated inter-workings amongst the optical layers of the network switching node leads to improved scalability, manageability, operational simplicity and affordability of optical transport networks. The main aspect leading to scalability and affordability is that of hierarchical optical pass-through; that is, the ability of highly utilized signals at any layer to pass-through a node in an all-optical manner without encountering more granular and generally more costly lower layers of the hierarchy.

For a more complete understanding of the invention, its objects and advantages, reference may be had to the following specification and to the accompanying drawings.

### BRIEF DESCRIPTION OF THE DRAWINGS

Figure 1 is a diagram depicting an exemplary optical hierarchy that may be employed in an optical transport network in accordance with the present invention;
Figure 2 is a block diagram depicting a layered architectural arrangement for a network switching node that supports switching of optical data signals at different optical layers in accordance with the present invention;
Figure 3 is a diagram illustrating how each optical layer may have a corresponding optical header embedded in an optical data signal in accordance with the present invention; and
Figure 4 is a diagram illustrating an example of how optical data signals at different optical layers may be switched through an optical transport network.

### DETAILED DESCRIPTION OF THE PREFERRED EMBODIMENTS

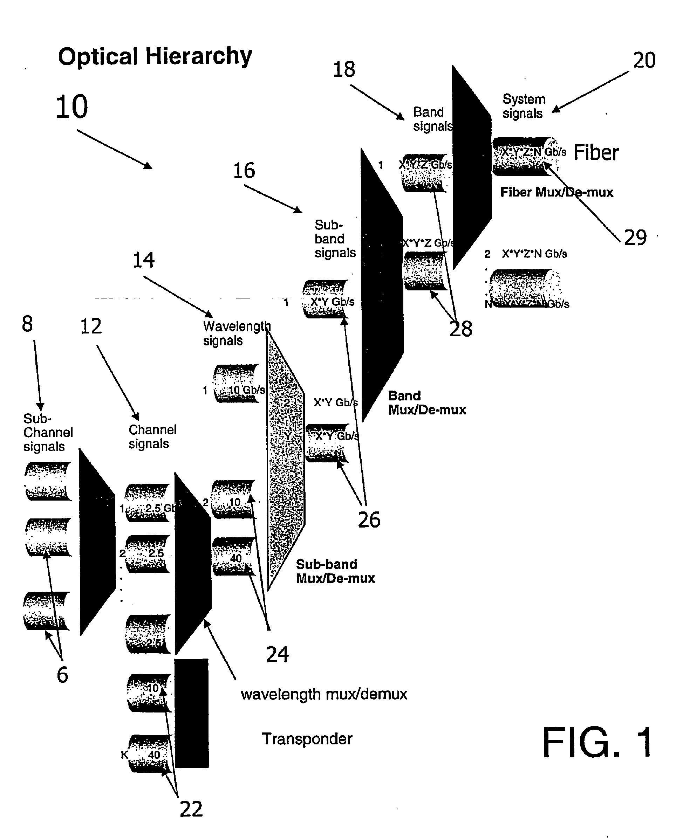

To increase network capacity, numerous optical signals may be multiplexed together to form a single optical system signal as is well known in the art. An exemplary optical line hierarchy 10 that may be employed in an optical transport network is depicted in Figure 1. In this example, the optical space associated with the optical transport network is partitioned into a number of optical layers: a sub-channel layer 8, channel layer 12, a wavelength layer 14, a sub-band layer 16, a band layer 18 and a fiber layer 20. While the following description is provided with reference to six optical layers, it is readily understood that more or less optical layers may be defined within the optical space. Likewise, it is readily understood that more or less sub-channels, channels, wavelengths, sub-bands and/or bands may be defined within each optical layer.

At the finest granular layer 8, a plurality of sub-channel signals 6 are selectively converted or combined to form a plurality of optical channels signals 22. As a result, each sub-channel signal becomes a member of a channel signal and the plurality of channel signals collectively define the channel layer 12. Similarly, a plurality of channel signals 22 are selectively converted or combined to form a plurality of optical wavelength signals 24. As a result, each channel signal becomes a member of an optical wavelength signal and the plurality of optical wavelength signals collectively define the wavelength layer 14.

At the next granular level, the plurality of optical wavelength signals 24 are selectively combined to form a plurality of optical sub-band signals 26. Each wavelength signal becomes a member of a sub-band signal and the plurality of sub-band signals collectively defines the sub-band layer 16. The plurality of optical sub-band signals 26 are in turn selectively combined to form a plurality of optical band signals 28. Each of the sub-band signals becomes a member of a band signal and the plurality of band signals collectively defines the band layer 18. The optical band signals 28, optical sub-band signals 26, optical wavelength signals 24, channel signals 22 and sub-channel signals 6 may be herein also referred to as intermediate data signals. Lastly, the plurality of optical band signals 28 are combined to form an optical system signal 29. The optical system signal 29 is then launched into the optical transport network on an optical transport line (fiber).

In sum, optical data signals may be constituted in a line hierarchy or layered membership relationship, where membership is based on some common physical attribute shared by the signals. Although the invention is not limited thereto, layer membership is preferably based on the wavelength of the optical signal. In particular, optical data signals having proximate wavelengths within a predefined range of wavelengths become members of the same group. In this way, the optical transport space is partitioned into different hierarchical layers. The purpose of the hierarchy is to facilitate more efficient traffic management in the less granular layers. Although grouping optical data signal having proximate wavelengths is presently preferred, it is envisioned that spectrally separated optical data signals may also become members of the same group.

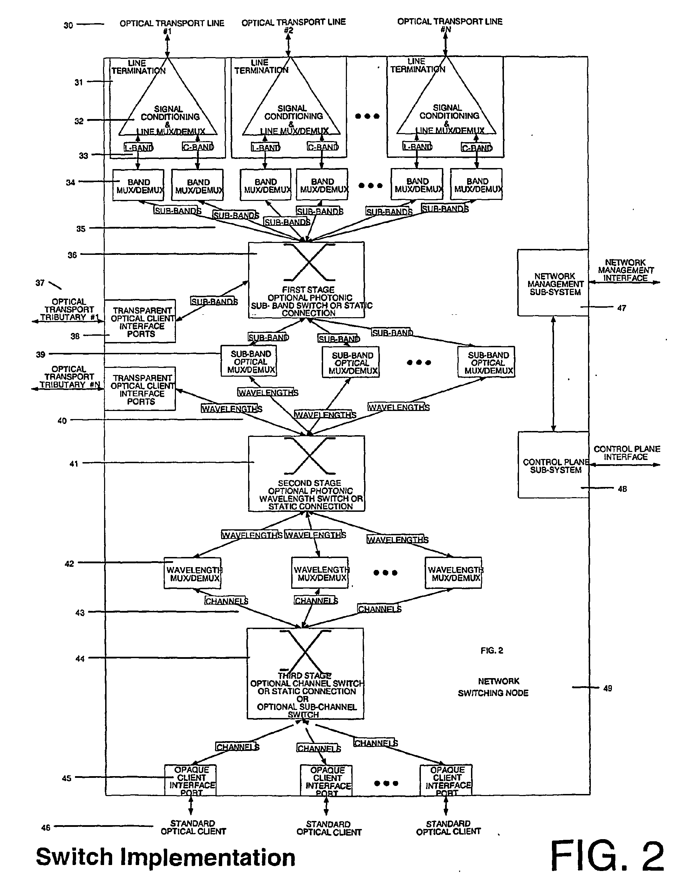

Figure 2 illustrates an exemplary layered architectural arrangement for a network switching node 49 that supports switching of optical data signals at different optical layers. The network switching node 49 is adapted to receive two or more bi-directional optical transport lines (fibers) 30. Each optical transport line 30 carries an optical system signal constituted in a layered membership relationship as described above. The optical transport lines (fibers) 30 are in turn connected to a plurality of line termination components 31. The line termination component 31 provides line termination, signal conditioning, line mux/demux, optical header generation and termination, as well as monitoring of the optical system signal. Each line termination component 31 is operable to receive an optical system signal and separate the optical system signal into a plurality of band signals 33. The band signals 33 may be directed (i.e., passed through) to another line termination component 31 using either an optical switch (not shown) or static fiber connections. The band signals may also be directed to an optional band mux/demux component 34.

Each band level mux/demux component 34 is operable to receive a band signal and separate the band signal into a plurality of optical sub-band signals 35. The inputs and outputs of the band mux/demux component 34 will be compatible with a band, a range of wavelength positions and the spectral bandwidth of each wavelength. The optical signals may also be monitored at the band level mux/demux component. It is to be readily understood that the network switching node 49 preferably supports bi-directional network traffic. Therefore, each of the mux/demux components described herein are operable to multiplex (or combine) optical data signals as well as demultiplex (or separate) optical data signals as is well known in the art.

An optional sub-band level photonic switch 36 is adapted to receive the plurality of optical sub-band signals 35 from the plurality of band level mux/demux components 34. The sub-band level photonic switch 36 is operable to route the optical sub-band signals amongst the output ports of the switch and may provide capabilities for monitoring the optical signals. For instance, the optical sub-band signals may be routed (i.e., passed through) amongst the optical transport lines 30. To do so, an optical sub-band signal is routed back up to an applicable band level mux/demux component 34, and then combined with other optical sub-band signals into a band signal prior to being launched as an optical system signal into an optical transport line. In any of these cases, the optical sub-band signals are routed within the photonic switch 36 without being terminated in the electrical domain. In lieu of or in conjunction with the sub-band level photonic switch 36, the routing of the optical sub-bands may also be performed using fiber connections that can be manually reconfigured.

When an optical sub-band signal embodies an optical data signal which requires routing at a lower granular layer, the optical sub-band signal may be dropped to one of a plurality of sub-band level mux/demux components 39. Each sub-band level mux/demux component 39 is adapted to receive at least one optical sub-band signal from either the sub-band level photonic switch 36 or one of the band level mux/demux components 34. In another embodiment, a given sub-band level mux/demux component 39 may also be adapted to receive an optical band signal from a line termination component 31. In either case, each sub-band level mux/demux component 39 is operable to separate the optical sub-band signal into a plurality of optical wavelength signals 40. The inputs and outputs of the sub-band mux/demux component 39 will be compatible with a band, a range of wavelength positions and the spectral bandwidth of each wavelength. The optical signals may be monitored at the sub-band level mux/demux component 39.

Alternatively, an optical sub-band signal may be routed to a transparent optical client interface port 38. The transparent optical client interface port processes the optical transport tributary signal 37, sub-bands 35 and/or wavelengths 40, in the optical domain. These processes would typically include line termination, optical header generation and termination, signal conditioning and monitoring of the optical tributaries signals 37. The transparent optical client interface ports may be connected to other, local or remote, network elements residing outside the network switching node. The interface on these network elements must be capable of launching an optical transport tributary signal that is compatible with the formats and physical characteristics of the wavelengths, sub-band or other optical signals processed by the network switching node. An example of this type of network element would be a customer premise equipment, at a remote site, that would aggregate sub-channels or channels into a wavelength and then adapts the wavelength into an optical transport tributary signal. These type of client interface ports may also be referred to as intermediate client interface ports.

An optional wavelength level photonic switch 41 is adapted to receive the plurality of optical wavelength signals from the plurality of sub-band level mux/demux components 39. The wavelength level photonic switch 41 is operable to route the optical wavelength signals amongst the output ports of the switch and may provide capabilities for monitoring the signal. In one instance, optical wavelength signals may be routed back up through the optical layers (i.e., passed through) to the optical transport lines. In another instance, optical wavelength signals may be routed to the transparent optical client interface ports 38. In either case, the optical wavelength signals are routed within the photonic switch without being terminated in the electrical domain. In lieu of or in conjunction with the wavelength level photonic switch 41, the routing of the optical wavelength signals may also be performed using fiber connections that can be manually reconfigured. It is envisioned that the band level mux/demux components 34, sub-band photonic switch 36, wavelength optical mux/demux components 39 and wavelength level switch 41 components may be integrated into a device or devices that when operated as a whole are functionally equivalent to what is described herein.

When an optical wavelength signal embodies an optical data signal which requires routing at a lower granular layer, optical wavelength signals may be dropped to the channel layer of the network switching node.

In one embodiment, the channel layer of the network switching node operates in the electrical domain. Each wavelength level mux/demux component 42 is adapted to receive at least one optical wavelength signal from the wavelength level photonic switch 41. Each wavelength level mux/demux component 42 terminates the optical wavelength signals into the electrical domain. The wavelength level mux-demux components 42 are further operable to convert the resulting electrical wavelength signals into channels 43 or virtually concatenated channels. The inputs and outputs of the wavelength level mux/demux components 42 will be compatible with a band, a range of wavelength grid positions, the spectral bandwidth and transmission rate of the wavelength. The wavelength level mux/demux components 42 also provide for the recovery and regeneration of the channel data and timing information in the electrical domain. Each of the channels may be modified to include housekeeping information, required for managing the connectivity and performance of the channel through a switch. The channels are then formatted for transmission through an electrical switch.

In this embodiment, the channel layer switch 44 operates in the electrical domain. The channel layer switch 44 is adapted to receive electrical channel and sub-channel signals from the wavelength level mux/demux components 42. The channel layer switch 44 is further operable to route the electrical channel and sub-channel signals amongst the output ports of the switch.

In an alternative embodiment, the channel layer of the network switching node operates in the optical domain. In this embodiment, each wavelength level mux/demux component 42 is adapted to receive at least one optical wavelength signal from the wavelength level photonic switch 41. Each wavelength level mux/demux component 42 terminates the optical wavelength signals into the electrical domain, and then converts the resulting electrical wavelength signals into channels 43 or virtually concatenated channels. The wavelength level mux/demux components 42 may also perform other signal processing functions as described above. However, in this embodiment, the channels are formatted and converted into one or more optical channel signals.

In this alternative embodiment, the channel layer switch 44 operates in the optical domain. The channel layer switch 44 is adapted to receive optical channel signals from the wavelength level mux/demux components 42. The optical channel signal may be routed amongst the output ports of the switch 44 without being terminated in the electrical domain: It is also envisioned that the channel level switch 44 may terminate to the incoming optical channel signals into the electrical domain, route the corresponding electrical channel signals, and then return the signals back to the optical domain prior to being output by the switch.

Irrespective of its domain of operation, the channel signals may be routed to various destinations within the switching node. In one instance, channel signals 43 may be routed back up through the optical layers to the optical transport lines or tributaries. This routing of optical channels enables key optical networking features to be remotely and dynamically allocated and managed. The optical networking features may include: wavelength translation of channels, channel data and timing regeneration, bridge and roll of channels and sub-channels from one wavelength to another, equipment and network protection switching, test access, grooming of a wavelength to rearrange the channels or sub-channels, filling of the wavelength to add more channels or sub-channels and aggregation of channels or sub-channels into a wavelength of a higher transmission rate.

In another instance, channel and sub-channel signals may be routed to opaque optical client interface ports 45. Each opaque client interface port 45 is adapted to receive at least one channel signal from the channel level switch 44. To the extent the channel signal is optical, the opaque client interface port 45 is operable to terminate the channel signal in the electrical domain. The optical client interface ports 45 provide key optical networking features that may include: channel or sub-channel data and timing regeneration, add/drop of subchannels or channels to optical client signals, bridge and roll of sub-channels or channels from one optical client to another, equipment and network protection switching, test access and demultiplexing of channels into sub-channels.

Each opaque client interface port 45 is also adapted to receive one or more optical client signals 46 originating from other network elements outside the network switching node. The optical client signals are defined to be standard optical signal formats as specified by the ITU-T, ANSI and IEEE standards bodies. Similarly, routing of optical client signals from a client interface port 45 enables key optical networking features to be remotely and dynamically allocated and managed. The optical networking features may include: termination of the optical client signal physical layer for various optical signal transmission rates, configuration of termination or transparent pass-through of the client signal's higher protocol layers, recovery and regeneration of the client signal data and clock, client signal performance and fault management, client signal diagnostics and test access, network and equipment protection, aggregation of sub-channels into channels or wavelengths, grooming of optical clients to rearrange the sub-channels, filling of the optical client to add more sub-channels, aggregation of sub-channels into an optical client of a higher transmission rate and reformatting of the channel for transmission to and from the channel switch.

The switching components for each optical layer are designed such that the number of ports provided by each switch may be increased independently while in-service and without causing any significant errors to be introduced on the optical data signal at the sub-band and wavelength layers, and no errors at the channel layer. Changing the size of the switch is accomplished by replacing the existing switch fabric with a new switch fabric. This configuration change is enabled by a redundant fabric design. It is envisioned that growing the switch size in the sub-band or wavelength layers may not result in errors introduced on the optical data signals. This allows the switching site to scale up, or down, as the number of optical data signals change.

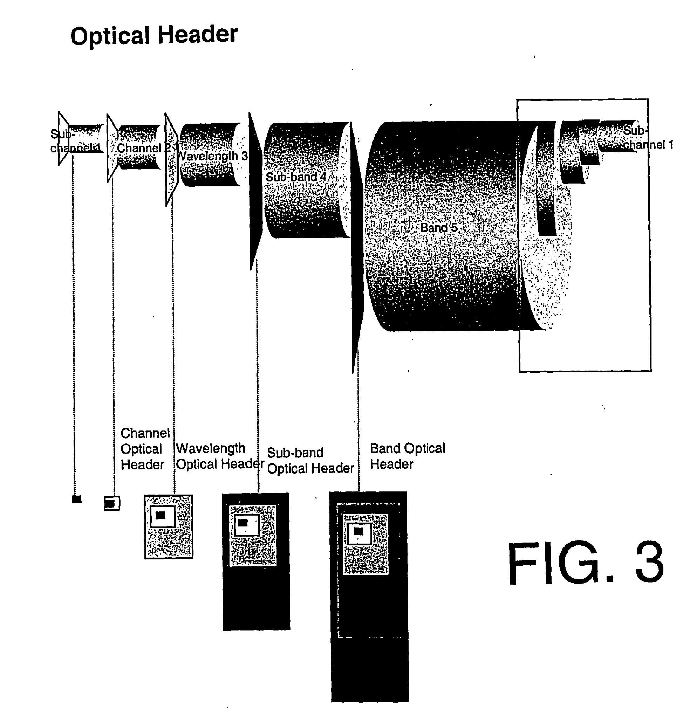

To facilitate the management of the optical links and paths in the switch and other network elements, each data signal in each optical layer may include an optical header as shown in Figure 3. These optical headers are based to a large extent on various well known specifications, such as ITU-T G.709, ITU-T G.707, ANSI T1.105 and IEEE 802.3ae specifications, to enable fault management, performance management, payload configuration management, connectivity or routing or switching management, error correction, network protection and maintenance of the links and paths. The optical headers also include the bandwidth to support data communications between nodes or network elements. The data communications channels may be used to transport control plane and/or management plane information. In addition, the optical headers are also used to control and monitor the optical transmission control loops in the optical layers.

As defined in ITU-T G.709, the optical headers for the Optical Transmission Section (OTS or "optical system signal"), Optical Multiplex Section (OMS or "band") and Optical Channel (OCH or "wavelength") optical layers are transported on a separate wavelength in one or more optical supervisory channels within the fiber. This type of optical header is defined as non-associated overhead. It is also envisioned that these headers may be transported optically by modulating the optical data signals with the overhead information. This type of optical header is defined as associated overhead. Processing of the optical headers within the OTS, OMS, and OCH optical layers does not require conversion of the optical data signal payload into the electrical domain. Only the optical supervisory channel is converted into the electrical domain to extract the optical headers. The optical headers for the Optical Channel Transport Unit (OTU or electrical "wavelength"), Optical Channel Data Unit (ODU or "optical channel") and sub-channels are incorporated in the electrical domain. This type of optical header is also defined as associated overhead. Processing of the optical headers within each of the OTU, ODU and sub-channel optical layers requires conversion of the optical data signals into the electrical domain. Similarly, ITU-T G.707, ANSI T1.105 and IEEE 802.3ae also define associated optical headers for client data signals that are processed in the electrical domain by the opaque optical client interface ports.

In operation, an optical header is generally written at origination points and read at intermediate or termination points within the network at each optical layer. The origination point of an optical signal will generate a new header based on local information while the termination point strips off the header information. The optical header is read at intermediate points in order to determine the performance and status of the optical signal as it transits the -network. The information collected at intermediate sites may be used for localizing faults or performance degradations or to perform maintenance activities such as protection switching. No change to the optical data signal overhead or payload is performed at the intermediate sites.

In the context of the network switching node shown in Figure 2, the optical headers of incoming signals are preferably read at the line termination components 31, the wavelength mux/demux components 42, the opaque optical client interface ports 45, and the transparent optical client interface ports 38. The connectivity, payload configuration and maintenance optical header information is used by the switch to verify the configuration of the switch connections and equipment against that of the link and path. Any inconsistencies between the two will result in alarms being generated and the appropriate maintenance signaling generated on the affected paths. The payload configuration information can also be used to determine the utilization of the link or path. Protection information in the optical header may be used by the switches at any of the optical layers to reroute the optical data signals from the current link or path to an alternate link or path. The fault and performance information is used by the switching node to determine the status and performance of the links and paths that it processes. Alarms and events are generated by the network management sub-system when appropriate and performance metrics may be collected and stored by the switching node. The error correction information is processed in the electrical domain by the wavelength mux/demux components 42 and optionally by the opaque optical interface ports 45. These components generate error correction codes and correct errors in the data that may result from the optical transmission process.

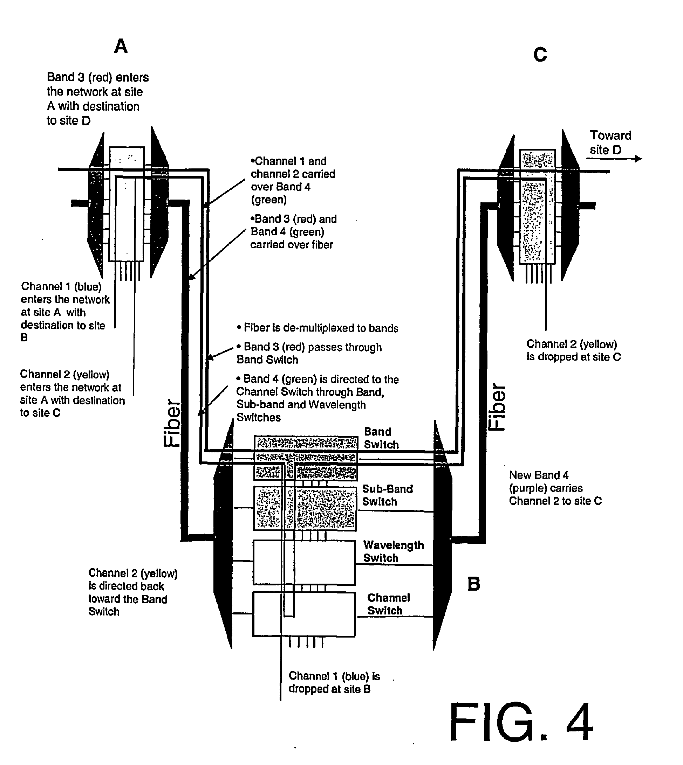

Signals may be dropped at network switching nodes as shown in Figure 4. For instance, channel 1 may be dropped at network switching node B. Channel 1 enters the network at network switching node A. Destination information in the connectivity overhead for optical band signal 4 indicates site B, and thus optical band signal 4 is terminated and dropped to the sub-band level switch at network switching node B. Similarly, the sub-band level switch drops the signal to the wavelength switch and then to the channel switch. According to the destination information in the connectivity overhead for channel 1, this channel is dropped to an applicable peripheral device. In contrast, channel 2 is re-directed to network switching node C. According to the destination information in the connectivity overhead for channel 2, this channel is directed to the wavelength switch, then to the sub-band switch and further to the band switch. Channel 2 is subsequently transported to network switching site C, where it is dropped using the process described above. In another instance, according to its destination information in its connectivity overhead, band 3 is passed through network switching site B. In this way, optical headers may be used to ensure that the optical data signals are correctly routed at the network switching node.

Returning to Figure 2, two administrative functions are used to manage the network switching node 49; a network management sub-system 47 and an optional control plane sub-system 48. These sub-systems coordinate the operation of the network switching node in the optical transport network. The local network management and control plane sub-systems maybe organized as part of a larger centralized hierarchical management system to effectively control and monitor optical data signals as they traverse one or more networks or subnetworks. The local network management and control plane sub-systems may alternately operate autonomously based on local link, path and equipment conditions and based on network management commands from a remote operator or from commands from a peer control plane sub-system in another network switching node. The control plane may be a distributed signaling system that, among other things, feeds connection and path status information to the network management sub-system, executes routing protocols to find the best route for an optical data signal through the network and executes signaling protocols to establish an optical data signal path. Specifically, the control plane interconnects each of the switch sub-components (e.g., mux-demux components, switches, interface ports etc.) using a signaling protocol that is transported via a data communication channel. The data communications channel may be transported in the optical header or preferably using an external data communications network. In a preferred embodiment, network management information is communicated over an optical supervisory channel as is well known in the art. The network management information enables the network manager to provision the network elements, form a model of the network topology at each optical layer, monitor the status of network components, provide centralized and remote management of performance and fault parameters, perform inventory of hardware components, links, paths and connections. The network management sub-system also provides performance, fault and configuration information about the links and paths to the control plane sub-system.

The architectural arrangement of the present invention enables more efficient inter-workings amongst the optical layers within the line and switch equipment by integrating key networking features into a single switching node. The integration of the optical layers in turn leads to a reduction in equipment, improved scalability, manageability and operational simplicity resulting in more affordable optical transport networks. For instance, in the event that the incoming network traffic is static in nature (i.e. the optical data signal paths are not subject to change), the line equipment offers the ability to manually add/drop and re-direct traffic in the network switching node at each layer, thereby enlarging the overall size of the node and not necessarily the size of optical switches. Furthermore, economic savings are achieved on network installation costs through utilization of the most optimal line and switch equipment. The high level of integration of the switching components also minimizes the number of interfaces to external network elements and reduces the overall cost of the network and also improves the system availability. Further cost savings are achieved by operational simplicity such as rapid installation and provisioning for growth, routing or re-routing of optical data signal paths without the need to manually reconfigure the switching node, commonality of and dynamic allocation of optical data signal processing resources, and overall consistency of network maintenance and management information of each optical layer within the network.

## Claims

1. An architectural arrangement for a network switching node (49) in an optical transport network, comprising:
at least two optical transport lines (30) each operable to carry an optical system signal therein, the optical system signal being constituted in a layered membership relationship that defines at least two optical layers;
a plurality of line terminations components (31) connected to the optical transport lines, such that each line termination is connected to one of the optical transport lines and operable to separate the optical system signal into at least two optical band signals (33);
a plurality of band level mux/demux components (34) connected to the plurality of line termination components, such that each band level mux/demux component is adapted to receive an optical band signal and operable to separate the optical band signal into a plurality of optical sub-band signals (35);
a sub-band level photonic switch (36) adapted to receive the plurality of optical sub-band signals form each of the plurality of band level mux/demux components and operable to route the optical sub-band signals amongst outputs of the switch;
**characterized in that** it further comprises:
a plurality of sub-band level mux/demux components (39) connected to the sub-band level photonic switch, such that each sub-band level mux/demux component is adapted to receive at least one optical sub-band signal from the sub-band level photonic switch and operable to separate the optical sub-band signal into a plurality of optical wavelength signals (40);
a wavelength level photonic switch (41) adapted to receive the plurality of optical wavelength signals from each of the plurality of sub-band level multiplexing components and operable to route the optical wavelength signals amongst outputs of the switch;
a plurality of wavelength level mux/demux components (42) connected to the wavelength level photonic switch, such that each wavelength level mux/demux component is adapted to receive at least one optical wavelength signal from the wavelength level photonic switch and operable to separate the optical wavelength signal into a plurality of channel signals (43);
an intermediate client interface port (38) adapted to receive either an optical wavelength signal from the wavelength level photonic switch or an optical sub-band signal from the sub-band level photonic switch or at least one optical signal originating form a network element outside of the network switching node and adapted to process the received optical signal prior to subsequent signal transmission;
a channel level switch (44) adapted to receive the plurality of channel signals from each of the plurality of wavelength level mux/demux components and operable to route the channel signals amongst outputs of the switch; and
a plurality of client interface ports (45) connected to the channel level switch, such that each client interface port is adapted to receive at least one channel signal from the channel level switch.

2. The architectural arrangement of Claim 1 further comprising a static fiber connection connected between two of the plurality of line termination components, thereby passing through one of the optical band signals.

3. The architectural arrangement of Claim 1 further comprising a static fiber connection connected between two of the plurality of band level mux/demux components, thereby passing through one of the sub-band signals.

4. The architectural arrangement of Claim 1 further comprising a static fiber connection connected between two of the plurality of sub-band level mux/demux components, thereby passing through one of the wavelength signals.

5. The architectural arrangement of Claim 1 further comprising a static fiber connection connected between two of the plurality of wavelength level mux/demux components, thereby passing through one of the channel signals.

6. The architectural arrangement of Claim 1 wherein the plurality of wavelength level mux/demux components are further operable to separate one or more optical wavelength signals into a plurality of sub-channel signals and the channel level switch is adapted to receive the plurality of sub-channel signals and operable to route the sub-channel signals amongst outputs of the switch.

7. The architectural arrangement of Claim 6 further comprising a static fiber connection connected between two of the plurality of wavelength level mux/demux components, thereby passing through one or more of the sub-channel signals.

8. The architectural arrangement of Claim 1 wherein the intermediate client interface port is further adapted to receive at least one optical signal originating from a network elements outside of the network switching node.

9. A method for routing optical signals in a network switching node (49) of an optical transport network, the network switching node interconnecting a plurality of optical transport lines (30), comprising;
receiving an optical system signal via a fist optical transport line at the network switching site residing in the optical transport network, the optical system signal having a plurality of optical sub-band signals embodied therein;
separating the optical system signal into the plurality of optical sub-band signals embodied therein;
routing at least one of the plurality of optical sub-band signals in a second optical transport line terminating at the network switching node;
**characterized in that** it further comprises:
separating a second optical sub-band signal into a plurality of wavelength signals embodied therein;
routing at least one of the plurality of wavelength signals to an intermediate client interface port (38), where the intermediate client interface port is adapted to receive either an optical wavelength signal or an optical sub-band signal or at least one optical signal originating form a network element outside of the network switching node;
routing at least one of the plurality of wavelength signals amongst the plurality of optical transport lines terminating at the network switching node;
separating the plurality of wavelength signals into a plurality of channel signals embodied therein; and
routing the plurality of channel signals amongst the plurality of optical transport lines terminating at the network switching node.

10. The method of Claim 9 wherein the step of routing at least one of the plurality of optical sub-band signals further comprises passing the at least one optical sub-band signal through a photonic switch (36).

11. The method of Claim 9 wherein the step of routing the remainder of the plurality of optical sub-band signals further comprises using a static fiber connection between two mux-demux components.

12. The method of Claim 9 further comprising the step of routing a third optical sub-band signal to a third optical transport line terminating at the network switching node.

13. The method of Claim 9 wherein the step of routing the remainder of the plurality of wavelength signals further comprises passing the plurality of wavelength signals through a photonic switch.

14. The method of Claim 9 wherein the step of routing the remainder of the plurality of wavelength signals further comprises using a static fiber connection between two mux/demux components.

15. The method of Claim 9 wherein the step of routing the plurality of channel signals further comprises passing the plurality of channel signals through a photonic switch.

16. The method of Claim 9 wherein the step of routing the plurality of channel signals further comprises using a static fiber connection between two mux/demux components.

17. The method of Claim 9 further comprising separating the plurality of wavelength signals into a plurality of sub-channel signals embodied therein and routing the plurality of sub-channel signals amongst the plurality of optical transport lines terminating at the network switching node.

18. The method of Claim 17 wherein the step of routing the plurality of sub-channel signals further comprises passing the plurality of sub-channel signals through a photonic switch.

19. The method of Claim 17 wherein the step of routing the plurality of sub-channel signals further comprises using a static fiber connection between two mux/demux components.

## Patentansprüche

1. Eine architektonische Anordnung für einen Netzwerk-Schaltknoten (49) in einem optischen Transportnetz, die folgendes umfaßt:
Mindestens zwei optische Transportleitungen (30), die jeweils betriebsbereit sind, um ein optisches Systemsignal darin zu transportieren, wobei das optische Systemsignal aus einer mehrschichtigen Mitgliedsbeziehung besteht, die mindestens zwei optische Schichten definiert;
Mehrere Leitungsende-Komponenten (31), die mit den optischen Transportleitungen verbunden sind, damit jedes Leitungsende an eine der optischen Transportleitungen angeschlossen werden kann und betriebsbereit ist, das optische Systemsignal in mindestens zwei optische Bandsignale (33) zu unterteilen;
Mehrere mux/demux Komponenten (34) auf Bandniveau, die an mehrere Leitungsende-Komponenten angeschlossen sind, so daß jede mux/demux Komponente auf Bandniveau geeignet ist, ein optisches Bandsignal zu empfangen und betriebsfähig dazu, das optische Bandsignal in mehrere optische Subbandsignale (35) zu unterteilen;
Ein Photonschalter (36) auf Subbandniveau, der geeignet ist, die mehreren optischen Subbandsignale von jeder der mehreren mux/demux Komponenten auf Bandniveau zu empfangen und betriebsbereit zu machen, damit sie die optischen Subbandsignale unter den Ausgaben des Schalters routen;
**Dadurch gekennzeichnet, daß** sie ferner umfaßt:
Mehrere mux/demux Komponenten (39) auf Subbandniveau, die an den Photonschalter auf Subbandniveau abgeschlossen sind, so daß jede mux/demux Komponenten auf Subbandniveau geeignet ist, mindestens ein optisches Subbandsignal vom Photonschalter auf Subbandniveau zu empfangen und betriebsbereit ist, das optische Subbandsignal in mehrere optische Wellenlängesignale (40) zu unterteilen;
Einen Photonschalter auf Wellenlängeniveau (41), der geeignet ist, die mehreren optischen Wellenlängensignale von jedem der mehreren Multiplexkomponenten auf Subbandniveau und betriebsbereit, die optischen Wellenlängensignale unter den Ausgaben des Schalters zu routen;
Mehrere mux/demux Komponenten (42) auf Wellenlängeniveau, die an den Photonschalter auf Wellenlängeniveau angeschlossen sind, so daß jede mux/demux Komponente auf Wellenlängenniveau geeignet ist, mindestens ein, optisches Wellenlängensignal vom Photonschalter auf Wellenlängeniveau empfängt und betriebsbereit ist, das optische Wellenlängensignal in mehrere Kanalsignale (43) zu unterteilen;
Einen Zwischenport (38) für die Kundenschnittstelle, der geeignet ist, entweder ein optisches Wellenlängensignal vom Photonschalter auf Wellenlängenniveau zu empfangen, oder ein optisches Subbandsignal vom Photonschalter auf Subbandniveau oder mindestens ein optisches Signal, das aus einem Netzwerkelement außerhalb des Netzwerk-Schaltknotens stammt, und so angepaßt ist, daß das empfangene optische Signal vor dem nachfolgenden Übertragungssignal verarbeitet wird;
Einen Kanalniveauschalter (44), der geeignet ist, die mehreren Kanalsignale von jeder der mehreren mux/demux Komponenten auf Wellenlängenniveau zu empfangen, und der betriebsbereit ist, die Kanalsignale unter den Ausgaben des Schalters zu routen;
Mehrere Kundenschnittstellenports, die an den Kanalniveauschalter angeschlossen sind, so daß jeder Kundenschnittstellenport geeignet ist, mindestens ein Kanalsignal vom Kanalniveauschalter zu empfangen.

2. Die architektonische Anordnung nach Anspruch 1, die ferner einen statischen Faseranschluß zwischen zwei der mehreren Leitungsende-Komponenten umfaßt, der daher durch eines der optischen Bandsignale geht.

3. Die architektonische Anordnung nach Anspruch 1, die ferner einen statischen Faseranschluß zwischen zwei der mehreren mux/demux Komponenten auf Bandniveau umfaßt, der daher durch eines der Subbandsignale geht.

4. Die architektonische Anordnung nach Anspruch 1, die ferner einen statischen Faseranschluß zwischen zwei der mehreren mux/demux Komponenten auf Subbandniveau umfaßt, der daher durch eines der Wellenlängesignale geht.

5. Die architektonische Anordnung nach Anspruch 1, die ferner einen statischen Faseranschluß zwischen zwei der mehreren mux/demux Komponenten auf Wellenlängenniveau umfaßt, der daher durch eines der Kanalsignale geht.

6. Die architektonische Anordnung nach Anspruch 1, **dadurch gekennzeichnet, daß** die mehreren mux/demux Komponenten auf Wellenlänge ferner betriebsbereit sind, um ein oder mehrere optische Wellenlängesignale in mehrere Subkanalsignale zu unterteilen, und **dadurch**, **daß** der Kanalniveauschalter geeignet ist, um die mehreren Subkanalsignale zu empfangen und betriebsbereit, um die Subkanalsignale unter den Ausgängen des Schalters zu routen.

7. Die architektonische Anordnung nach Anspruch 6, die ferner einen statischen Faseranschluß zwischen zwei der mehreren mux/demux Komponenten auf Wellenlängenniveau umfaßt, der daher durch ein oder mehrere Subkanalsignale geht.

8. Die architektonische Anordnung nach Anspruch 1, **dadurch gekennzeichnet, daß** der Zwischenport (38) für die Kundenschnittstelle ferner geeignet ist, um mindestens ein optisches Signal aus einem Netzwerkelement außerhalb des Netzschaltknotens zu empfangen.

9. Eine Methode für das Routen von optischen Signalen in einem Netzschaltknoten (49) eines optischen Transportnetzes, wobei der Netzschaltknoten mehrere optische Transportleitungen (30) verbindet, die umfaßt:
Empfang eines optischen Systemsignals über eine erste optische Transportleitung auf der Schaltsite des Netzwerks, die im optischen Transportnetz vorhanden ist, wobei das optische System mehrere darin ausgeführte Subbandsignale hat; Das Unterteilen des optischen Systemsignals in mehrere optische Subbandsignale, die darin ausgeführt sind;
Routing von mindestens einem der mehreren optischen Subbandsignale in einer zweiten optischen Transportleitung, die am Netzschaltknoten endet;
**Dadurch gekennzeichnet, daß** sie weiter umfaßt:
Das Unterteilen eines zweiten optischen Subbandsignals in mehrere darin ausgeführte Wellenlängesignale;
Routing von mindestens einem der mehreren Wellenlängesignale zu einem Zwischenport (38) für die Kundenschnittstelle, wobei der Zwischenport für die Kundenschnittstellegeeignet ist, entweder ein optisches Wellenlängesignal zu empfangen, oder mindestens ein optisches Signal aus einem Netzwerkelement außerhalb des Netzschaltknotens;
Routing von mindestens einem von mehreren Wellenlängesignalen unter den mehreren optischen Transportleitungen, die am Netzschaltknoten enden;
Das Unterteilen der mehreren Wellenlängesignale in mehrere darin ausgeführte Kanalsignale;
Routing der mehreren Kanalsignale unter den mehreren optischen Transportleitungen , die am Netzschaltknoten enden.

10. Die Methode nach Anspruch 9, **dadurch gekennzeichnet, daß** der Schritt des Routing von mindestens einem der mehreren optischen Subbandsignale außerdem umfaßt, mindestens ein optisches Subbandsignal durch einen Photonschalter (36) zu führen.

11. Die Methode nach Anspruch 9, **dadurch gekennzeichnet, daß** der Schritt des Routing der restlichen der mehreren optischen Subbandsignale außerdem umfaßt, einen statischen Faseranschluß zwischen zwei mux/demux Komponenten zu benutzen.

12. Die Methode nach Anspruch 9, **dadurch gekennzeichnet, daß** sie außerdem den Schritt umfaßt, ein drittes optisches Subbandsignal zu einer dritten optischen Transportleitung zu führen, die am Netzschaltknoten endet.

13. Die Methode nach Anspruch 9, **dadurch gekennzeichnet, daß** der Schritt des Routing der restlichen der mehreren Wellenlängesignale außerdem umfaßt, die mehreren Wellenlängesignale durch einen Photonschalter zu führen.

14. Die Methode nach Anspruch 9, **dadurch gekennzeichnet, daß** der Schritt des Routing der restlichen der mehreren Wellenlängesignale außerdem umfaßt, einen statischen Faseranschluß zwischen zwei mux/demux Komponenten zu benutzen.

15. Die Methode nach Anspruch 9, **dadurch gekennzeichnet, daß** der Schritt des Routing der mehreren Kanalsignale außerdem umfaßt, die mehreren Kanalsignale durch einen Photonschalter zu führen.

16. Die Methode nach Anspruch 9, **dadurch gekennzeichnet, daß** der Schritt des Routing der mehreren Kanalsignale außerdem umfaßt, einen statischen Faseranschluß zwischen zwei mux/demux Komponenten zu benutzen.

17. Die Methode nach Anspruch 9, **dadurch gekennzeichnet, daß** sie außerdem das Unterteilen der mehreren Wellenlängesignale in mehrere darin ausgeführte Subkanalsignale umfaßt und das Routing der mehreren Subkanalsignale unter die mehreren optischen Transportleitungen, die am Netzschaltknoten enden.

18. Die Methode nach Anspruch 17, **dadurch gekennzeichnet, daß** der Schritt des Routing der mehreren Subkanalsignale außerdem umfaßt, die mehreren Subkanalsignale durch einen Photonschalter zu führen.

19. Die Methode nach Anspruch 17, **dadurch gekennzeichnet, daß** der Schritt des Routing der mehreren Subkanalsignale außerdem umfaßt, einen statischen Faseranschluß zwischen zwei mux/demux Komponenten zu benutzen.

## Revendications

1. Agencement architectural destiné à un noeud de commutation réseau (49) dans un réseau de transport optique, comprenant :
au moins deux lignes de transport optiques (30), chacune pouvant être actionnée afin de véhiculer un signal de système optique à l'intérieur, le signal de système optique étant réalisé selon une relation d'appartenance par couche qui définit au moins deux couches optiques ;
une pluralité de composants de raccords de ligne (31) connectés aux lignes de transport optiques, de telle sorte que chaque raccord de ligne est connecté à l'une des lignes de transport optiques et peut être actionné afin de séparer le signal du système optique en au moins deux signaux de bande optiques (33) ;
une pluralité de composants de multiplexeur/démultiplexeur de niveau bande (34) connectés à la pluralité de composants de raccords de ligne, de telle sorte que chaque composant de multiplexeur/démultiplexeur de niveau bande est conçu afin de recevoir un signal de bande optique et peut être actionné afin de séparer le signal de bande optique en une pluralité de signaux de sous-bande optiques (35) ;
un commutateur photonique de niveau sous-bande (36) conçu afin de recevoir la pluralité de signaux de sous-bande optiques provenant de chacun de la pluralité de composants de multiplexeur/démultiplexeur de niveau bande et pouvant être actionné afin d'acheminer les signaux de sous-bande optiques parmi les sorties du commutateur ;
**caractérisé en ce qu'**il comprend en outre :
une pluralité de composants de multiplexeur/démultiplexeur de niveau sous-bande (39) connectés au commutateur photonique de niveau sous-bande, de telle sorte que chaque composant de multiplexeur/démultiplexeur de niveau sous-bande est conçu afin de recevoir au moins un signal de sous-bande optique provenant du commutateur photonique de niveau sous-bande et pouvant être actionné afin de séparer le signal de sous-bande optique en une pluralité de signaux de longueur d'onde optiques (40) ;
un commutateur photonique de niveau longueur d'onde (41) conçu afin de recevoir la pluralité de signaux de longueur d'onde optiques provenant de chacun de la pluralité de composants de multiplexeur de niveau sous-bande et pouvant être actionné afin d'acheminer les signaux de longueur d'onde optiques parmi les sorties du commutateur ;
une pluralité de composants de multiplexeur/démultiplexeur de niveau longueur d'onde (42) connectés au commutateur photonique de niveau longueur d'onde, de telle sorte que chaque composant de multiplexeur/démultiplexeur de niveau longueur d'onde est conçu afin de recevoir au moins un signal de longueur d'onde optique provenant du commutateur photonique de niveau longueur d'onde et pouvant être actionné afin de séparer le signal de longueur d'onde optique en une pluralité de signaux de canal (43) ;
un port d'interface client intermédiaire (38) conçu pour recevoir un signal de longueur d'onde optique provenant du commutateur photonique de niveau longueur d'onde ou un signal de sous-bande optique provenant du commutateur photonique de niveau sous-bande ou au moins un signal optique provenant d'un élément de réseau situé en dehors du noeud de commutation réseau et conçu afin de traiter le signal optique reçu avant l'émission de signaux suivants ;
un commutateur de niveau canal (44) conçu afin de recevoir la pluralité de signaux de canal provenant de chacun de la pluralité de composants de multiplexeur/démultiplexeur de niveau longueur d'onde et pouvant être actionné afin d'acheminer les signaux de canal parmi les sorties du commutateur ; et
une pluralité de ports d'interface client (45) connectés au commutateur de niveau canal, de telle sorte que chaque port d'interface client est conçu afin de recevoir au moins un signal de canal provenant du commutateur de niveau canal.

2. Agencement architectural selon la revendication 1, comprenant en outre une connexion à fibres statiques connectée entre deux de la pluralité de composants de raccords de ligne, au travers de laquelle passe donc l'un des signaux de bande optiques.

3. Agencement architectural selon la revendication 1, comprenant en outre une connexion à fibres statiques connectée entre deux de la pluralité de composants de multiplexeur/démultiplexeur de niveau bande, au travers de laquelle passe donc l'un des signaux de sous-bande.

4. Agencement architectural selon la revendication 1, comprenant en outre une connexion à fibres statiques connectée entre deux de la pluralité de composants de multiplexeur/démultiplexeur de niveau sous-bande, au travers de laquelle passe donc l'un des signaux de longueur d'onde.

5. Agencement architectural selon la revendication 1, comprenant en outre une connexion à fibres statiques connectée entre deux de la pluralité de composants de multiplexeur/démultiplexeur de niveau longueur' d'onde, au travers de laquelle passe donc l'un des signaux de canal.

6. Agencement architectural selon la revendication 1, dans lequel la pluralité de composants de multiplexeur/démultiplexeur de niveau longueur d'onde peut en outre être actionnée afin de séparer un ou plusieurs des signaux de longueur d'onde optiques en une pluralité de signaux de sous-canal, et le commutateur de niveau canal est conçu afin de recevoir la pluralité de signaux de sous-canal et peut être actionné afin d'acheminer les signaux de sous-canal sur les sorties du commutateur.

7. Agencement architectural selon la revendication 6, comprenant en outre une connexion à fibres statiques connectée entre deux de la pluralité des composants de multiplexeur/démultiplexeur de niveau longueur d'onde, au travers de laquelle passent_donc un ou plusieurs des signaux de sous-canal.

8. Agencement architectural selon la revendication 1, dans lequel le port d'interface client intermédiaire est en outre conçu afin de recevoir au moins un signal optique provenant d'un élément de réseau situé en dehors du noeud de commutation réseau.

9. Procédé permettant d'acheminer des signaux optiques dans un noeud de commutation réseau (49) d'un réseau de transport optique, le noeud de commutation réseau reliant une pluralité de lignes de transport optiques (30), comprenant les étapes consistant à:
recevoir un signal de système optique par l'intermédiaire d'une première ligne de transport optique au niveau du site de commutation réseau résidant au sein du réseau de transport optique, le signal de système optique comportant une pluralité de signaux de sous-bande optiques intégrés à l'intérieur ;
séparer le signal du système optique en la pluralité de signaux de sous-bande optiques intégrés à l'intérieur ;
acheminer au moins l'un de la pluralité de signaux de sous-bande optiques dans une deuxième ligne de transport optique raccordée au niveau du noeud de commutation réseau ;
**caractérisé en ce qu'**il comprend en outre les étapes consistant à :
séparer un deuxième signal de sous-bande optique en une pluralité de signaux de longueur d'onde intégrés à l'intérieur ;
acheminer au moins l'un de la pluralité de signaux de longueur d'onde vers le port d'interface client intermédiaire (38), moyennant quoi le port d'interface client intermédiaire est conçu afin de recevoir un signal de longueur d'onde optique ou un signal de sous-bande optique ou au moins un signal optique provenant d'un élément de réseau situé en dehors du noeud de commutation réseau ;
acheminer au moins l'un de la pluralité de signaux de longueur d'onde parmi la pluralité des lignes de transport optiques raccordées au niveau du noeud de commutation réseau ;
séparer la pluralité de signaux de longueur d'onde en une pluralité de signaux de canal intégrés à l'intérieur ; et
acheminer la pluralité de signaux de canal sur la pluralité de lignes de transport optiques raccordées au niveau du noeud de commutation réseau.

10. Procédé selon la revendication 9, dans lequel l'étape consistant à acheminer au moins l'un de la pluralité de signaux de sous-bande optiques comprend en outre le passage du au moins un signal de sous-bande optique au travers d'un commutateur photonique (36).

11. Procédé selon la revendication 9, dans lequel l'étape consistant à acheminer le reste de la pluralité de signaux de sous-bande optiques comprend en outre l'utilisation d'une connexion à fibres statiques entre les deux composants de multiplexeur/démultiplexeur.

12. Procédé selon la revendication 9, comprenant en outre l'étape consistant à acheminer un troisième signal de sous-bande optique vers une troisième ligne de transport optique raccordée au niveau du noeud de commutation réseau.

13. Procédé selon la revendication 9, dans lequel l'étape consistant à acheminer le reste de la pluralité de signaux de longueur d'onde comprend en outre le passage de la pluralité de signaux de longueur d'onde au travers d'un commutateur photonique.

14. Procédé selon la revendication 9, dans lequel l'étape consistant à acheminer le reste de la pluralité de signaux de longueur d'onde comprend en outre l'utilisation d'une connexion à fibres statiques entre les deux composants de multiplexeur/démultiplexeur.

15. Procédé selon la revendication 9, dans lequel l'étape consistant à acheminer la pluralité de signaux de canal comprend en outre le passage de la pluralité de signaux de canal au travers d'un commutateur photonique.

16. Procédé selon la revendication 9, dans lequel l'étape consistant à acheminer la pluralité de signaux de canal comprend en outre l'utilisation d'une connexion à fibres statiques entre les deux composants de multiplexeur/démultiplexeur.

17. Procédé selon la revendication 9, comprenant en outre la séparation de la pluralité de signaux de longueur d'onde en une pluralité de signaux de sous-canal intégrés à l'intérieur et à acheminer la pluralité de signaux de sous-canal parmi la pluralité de lignes de transport optiques raccordées au niveau du noeud de commutation réseau.

18. Procédé selon la revendication 17, dans lequel l'étape consistant à acheminer la pluralité de signaux de sous-canal comprend en outre le passage de la pluralité de signaux de sous-canal au travers d'un commutateur photonique.

19. Procédé selon la revendication 17, dans lequel l'étape consistant à acheminer la pluralité de signaux de sous-canal comprend en outre l'utilisation d'une connexion à fibres statiques entre les deux composants de multiplexeur/démultiplexeur.
